# EUROPÄISCHE PATENTSCHRIFT

(11) **EP 1 182 067 B1**
(45) Veröffentlichungstag und Bekanntmachung des Hinweises auf die Patenterteilung: **19.10.2005**
(21) Anmeldenummer: 01118507.1
(22) Anmeldetag: 01.08.2001
(51) Int. Cl.: B60J 1/20, B60J 3/02, E06B 9/56

(54) **Heckfensterrollo mit Bowdenzug**
Roller blind for rear window
Store à enrouleur pour fenêtre arrière

(30) Priorität: 25.08.2000 DE 10041708
(43) Veröffentlichungstag der Anmeldung: 27.02.2002
(73) Patentinhaber: BOS GmbH & Co. KG, 73760 Ostfildern (DE)
(72) Erfinder: Schlecht, Werner P., 71665 Vaihingen/Enz (DE); Seel, Holger, 71134 Aidlingen (DE); Walter, Herbert, 73061 Ebersbach (DE)
(74) Vertreter: Rüger, Barthelt & Abel Patentanwälte

(56) Entgegenhaltungen:
- EP-A- 0 240 747
- EP-A- 0 800 985
- DE-A- 19 539 848
- DE-A- 19 806 736
- US-A- 5 201 810

## Beschreibung

Aus der EP 0 240 747 ist ein Heckscheibenrollo bekannt, das führungslos arbeitet. Die federvorgespannte Wickelwelle ist bei dem bekannten Heckscheibenrollo in einem Gehäuse auf oder unter der Hutablage drehbar gelagert. An der Wickelwelle ist an einer Kante die Rollobahn angebracht, deren andere dazu parallel verlaufende Kante mit einer Zugstange verbunden ist. Die Zugstange steift gleichzeitig die betreffende Kante der Rollobahn aus.

Um die Rollobahn aufzuspannen und im aufgespannten Zustand zu halten, sind neben der Wickelwelle zwei Schwenkhebel gelagert. Das freie Ende der beiden starren Schwenkhebel greift gleitend in den Zugstab ein. Durch Verschwenken der Schwenkhebel wird die Rollobahn gegen die Wirkung der Feder von der Wickelwelle abgezogen und aufgespannt. Gleichzeitig tragen die Schwenkhebel in jeder Betriebsstellung diese Kante der Rollobahn und halten die Rollobahn im Zusammenwirken mit der federvorgespannten Wickelwelle die Rollbahn aufgespannt.

Zum Verschwenken der Hebel weisen diese Verlängerungen auf, die über die Schwenkachse hinausgehen. An diesen Verlängerungen, die als Kurbelarme dienen, greifen Kuppelstangen an, deren anderes Ende ebenfalls mit einer Kurbel gekuppelt ist, die durch einen Elektromotor wahlweise in Umdrehungen zu versetzen ist.

Bei einer anderen in dieser Druckschrift geoffenbarten Ausführungsform ist mit den Schwenkhebeln drehfest ein mit Zähnen versehenes Rad verbunden. Die Zähne des Rades greifen in ein Lochband ein, das schubsteif in einer C-förmigen Schiene geführt ist. Die C-förmige Schiene muss mit einem entsprechenden radialen Abstand um das Zahnrad herumgeführt werden, damit der Eingriff zwischen dem Lochband und den Zähnen des Zahnrades gewährleistet ist.

Beide Anordnungen haben sich in der Vergangenheit auf dem Markt sehr gut bewährt. Ihnen haftet jedoch der Nachteil an, dass der Getriebemotor etwa in der Mitte zwischen den Schwenkachsen der Hebel untergebracht sein muss, und zwar muss die Kurbel, an der die Stangen angreifen, bzw. das betreffende Zahnrad für das Lochband, in derselben Ebene liegen wie die Zahnräder der Schwenkhebel bzw. deren Antriebskurbeln. Dadurch ergibt sich zwingend ein nicht unerheblicher Raumbedarf an einer speziellen Stelle neben der Wickelwelle.

Eine auf die Lösung nach der EP 0 240 747 zurückgehende Abwandlung ist in der DE 195 39 848 beschrieben. Hierbei erfolgt der Antrieb der Hebel bei dem einen Ausführungsbeispiel in derselben Weise wie dies oben erläutert ist, wobei zusätzlich Federn verwendet werden, um die Kennlinie zu verändern.

Bei der anderen Lösung sind die über die Achse hinausragenden Hebelabschnitte miteinander über eine Zugfeder verbunden, wodurch die Aufspannhebel in Richtung auf ein Aufspannen der Rollobahn vorgespannt sind. Das Einfahren der Rollobahn geschieht zwangsweise, indem mit Hilfe von Bowdenzügen die beiden Aufspannhebel gegen die Wirkung der Feder eingeklappt werden. Dazu greifen die Bowdenzüge, bezogen auf die Schwenkachse der Aufspannhebel, auf der anderen Seite an, wie die das Aufklappen bewirkende Zugfeder.

Ausgehend hiervon ist es Aufgabe der Erfindung ein Fensterrollo zu schaffen, bei dem der Antriebsmotor an beliebiger Stelle untergebracht werden kann.

Diese Aufgabe wird erfindungsgemäß durch das Fensterrollo mit den Merkmalen des Anspruches 1 gelöst.

Bei dem erfindungsgemäßen Fensterrollo ist die Antriebseinrichtung für das Betätigungselement über flexible Koppelmittel getrieblich mit dem Betätigungselement verbunden. Dadurch kann die Lage des betreffenden Antriebsmittels, in der Regel des Elektromotors innerhalb des Fahrzeugs frei gewählt werden. Es ist nicht mehr notwendig, den Antriebsmotor zwischen Betätigungselementen in Gestalt der Schwenkhebel unterzubringen. Der Antriebsmotor kann vielmehr abgesetzt in einem Seitenbereich des Fahrzeugs montiert werden, dort wo die Unterbringung wegen der notwendigerweise vorhandenen Hohlräume zwischen Außenkarosserie und Innenverkleidung hinreichen Platz bietet. Er kann auch auf der anderen Seite der Wickelwelle angeordnet werden.

Obwohl in aller Regel die Verbindung zwischen dem Koppelmittel und dem jeweiligen Betätigungselement so gewählt ist, dass im wesentlichen Zugkräfte in dem Koppelmittel auftreten, sind am Ende der Einfahrbewegung Druckkräfte nicht vermeidbar.

Während der Einfahrbewegung des Rollos wirkt der Federmotor der Wickelwelle im Sinne eines Zurückschwenkens des jeweiligen Betätigungsmittels in eine Lage, in der das Betätigungsmittel im Wesentlichen zu der Wickelwelle parallel liegt. Der Antriebsmotor braucht für diese Schwenkbewegung nur eine geringe Zugkraft aufzubringen, wenn die Hebel noch verhältnismäßig steil, d.h. rechtwinklig zu Wickelwelle stehen. Gegen Ende der Schwenkbewegung ändert sich die Zugkraft in eine Schubkraft, wenn dafür gesorgt wird, dass die Schwenkhebel vollständig in die Ruhelage zurückgeschwenkt werden. Dabei müssen gegebenenfalls Widerstände überwunden werden, die entstehen, wenn an der Zugstange angebrachte Rollen den Gehäuseschlitz des Fensterrollos passieren. Die Rollen sollen eine Beschädigung der Heizdrähte an der Innenseite der Heckfensterscheibe verhindern. Damit sie am Schlitzrand vorbeigelangen können, reicht die Rückzugskraft der Feder in der Wickelwelle nicht aus, vielmehr müssen die Hebel durch den Antriebsmotor mit Kraft eingeklappt werden.

Je nach Ausführungsform, wird die nach dem Einklappen erreichte mechanische Blockierung einer weiteren Schwenkbewegung auch benutzt, um den Motor anzuhalten. Der Motorstrom wird anschließend selbsttätig nach einer vorgegebenen Zeit abgeschaltet oder er wird abgeschaltet, wenn sein Wert eine vorgegebene Schranke übersteigt.

Damit die flexiblen Koppelmittel bei Druckbelastung nicht ausknicken, sind zusätzlich Knickschutzmittel vorhanden, die dazu dienen, einen an einem Ende der Seele befindlichen Abschnitt, der aus der flexiblen Hülle herausragt, in jeder Betriebsstellung knicksicher zu führen.

Je nach Gestaltung kann die knicksichere Führung sowohl im Bereich des Betätigungselementes als auch im Bereich der Antriebseinrichtung vorhanden sein. Insbesondere wenn die elektromotorische Antriebseinrichtung, die mit den Koppelmitteln verbunden ist, mit Hilfe eines Kurbelantriebs arbeitet, ist es zweckmäßig, wenn an beiden Enden der Koppelmittel die Seele mit derartigen Knickschutzmitteln versehen ist.

Um die Knickschutzmittel auszuführen, kommen unterschiedliche Konstruktionen in Betracht.

Bei einer Ausführungsform ist das Ende der Seele mit einem Rohr starr verbunden, durch das die Seele koaxial hindurchführt und das die Hülle des Bowdenzugs von außen übergreift. Die Hülle des Bowdenzugs kann in jedem Bereich, wo dieses Verstärkungsrohr die Hülle übergreift, steif ausgeführt sein, um die gewünschte Führungswirkung zustande zu bringen. Die Hülle und das mit der Seele verbundene Rohr wirken dann wie ein Teleskop. Das versteifte Ende der Hülle kann dabei wiederum ein eigenes starres Rohr sein. An einem Ende dieses Rohres ist die Hülle des Bowdenzugs angebracht.

Die andere Möglichkeit besteht darin, das betreffende Ende der Seele selbst biegesteif auszuführen. Hierzu kann die Seele in einem biege- bzw. knicksteifen Stab enden, der entsprechend geführt wird.

Um die Seele der Koppelmittel hin und her zubewegen, kann beispielsweise am motorseitigen Ende die Seele eine Verzahnung aufweisen, in die ein Zahnrad des Antriebsmotors eingreift.

Als Betätigungsmittel zum Aufspannen der Rollobahn kommen einfache Hebel in Frage, die an ihrem freien Ende gleitend in die Zugstange eingreifen, oder Kniehebel, deren freies Ende über eine Scharnierachse mit der Zugstange verbunden ist. Sowohl die einstückigen Hebel als auch der innere Kniehebelarm weisen eine über die Schwenkachse hinausgehende Verlängerung auf, an der das Koppelmittel angreift. Dadurch kann erreicht werden, dass die Koppelmittel in jeder Schwenkstellung des Betätigungselementes innerhalb des Gehäuses bleiben, d.h. von dem Schlitz verdeckt bleiben.

Um die Wickelwelle in Gang zu setzen, kann wie beim Stand der Technik eine Feder verwendet werden, die mit der Wickelwelle drehfest gekuppelt ist. Mittels der Feder wird die Wickelwelle in Aufwickelrichtung der Rollobahn vorgespannt.

Im übrigen sind Weiterbildungen der Erfindung Gegenstand von Unteransprüchen, wobei als geoffenbarte Weiterbildungen auch solche Kombinationen von Unteransprüchen angesehen werden, die durch kein spezielles Ausführungsbeispiel abgedeckt sind. In der Zeichnung zeigen:
- Fig. 1: den Heckbereich einer Limousine, mit Blick auf die Außenseite der Heckscheibe unter Veranschaulichung eines Heckscheibenrollos, in einer abgebrochenen perspektivischen Darstellung,
- Fig. 2: einen Abschnitt der Fensterrollos nach Fig. 1, in einer perspektivischen Darstellung,
- Fig. 3: einen der Schwenkhebel in Verbindung mit dem Koppelmittel teilweise längsgeschnitten,
- Fig. 4: ein anderes Ausführungsbeispiel, in einer Darstellung ähnlich Fig. 3, und
- Fig. 5: ein drittes Ausführungsbeispiel, in einer Darstellung ähnlich Fig. 2.

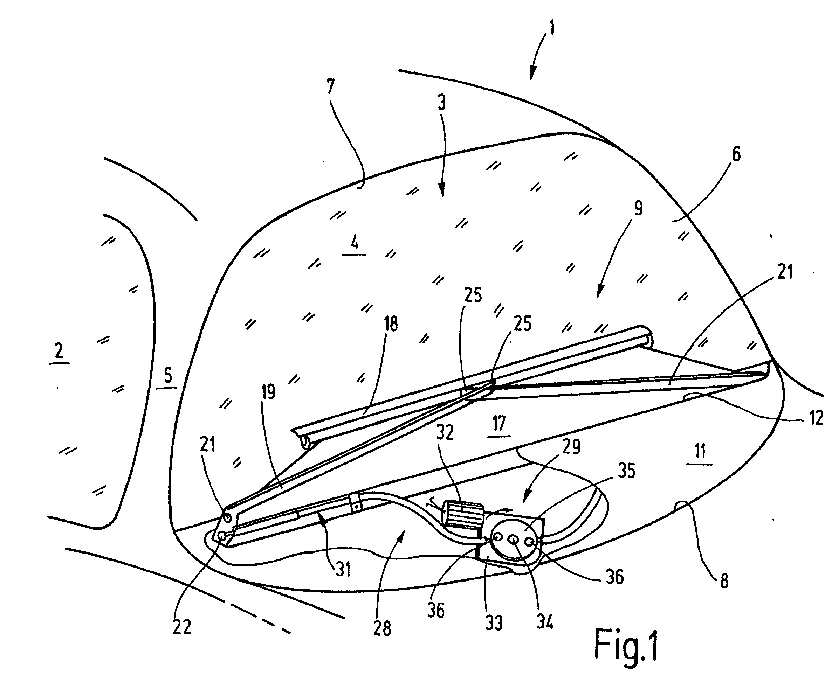

Fig. 1 zeigt in stark schematisierter Weise die Heckpartie eines Kraftfahrzeuges 1 in einer Ansicht von hinten. In der perspektivischen Darstellung ist ein linkes hinteres Seitenfenster 2 sowie ein Heckfenster 3 mit der eingesetzten üblicherweise gekrümmten Fensterscheibe 4 zu erkennen. Die Fensterscheibe 4 befindet sich zwischen zwei seitlichen C-Säulen 5 und 6 und wird oben von einer Dachhinterkante 7 und unten durch eine Kante 8 begrenzt.

Vor der Innenseite der Fensterscheibe 4 befindet sich ein Fensterrollo 9, das in einer teilweise ausgezogenen Stellung gezeigt ist.

Im Inneren des Fahrzeugs befindet sich vor dem Heckfenster 3 eine teilweise aufgebrochen veranschaulichte Hutablage 11, in der ein über nahezu die gesamte Breite der Hutablage 11 sich erstreckender Auslaufschlitz 12 enthalten ist. Die Hutablage 11 füllt den Bereich zwischen einer Rücksitzbank und dem Heckfenster 3.

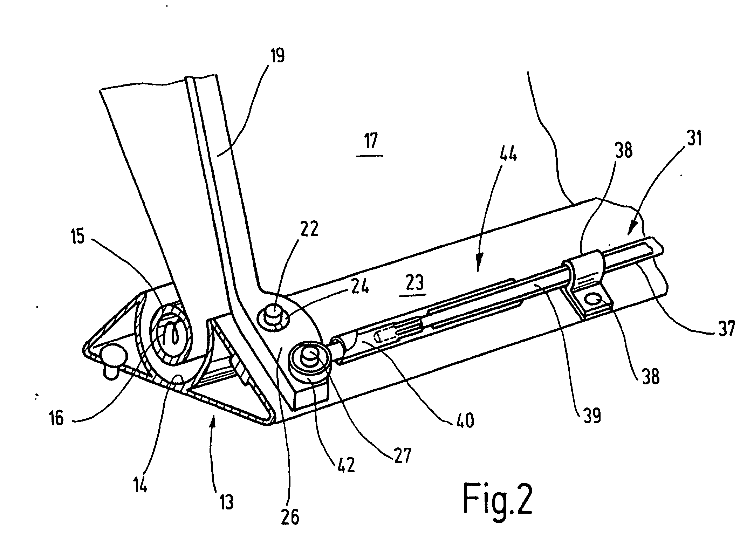

Wie die zusätzlich in Bezug genommene Figur 2 veranschaulicht, gehört zu dem Fensterrollo 9 ein unter der Hutablage 11 befestigtes Gehäuse 13 in Gestalt eines im Querschnitt etwa dreieckförmigen Strangpressprofils. In dem Gehäuse 13, das sich über die gesamte Breite des Fensterrollos 9 erstreckt, ist eine zylindrische nach oben offene Nut 14 enthalten, in der eine Wickelwelle 15 drehbar gelagert ist. Die Lagerung der Wickelwelle 15 geschieht auf Zapfen, die in nicht weiter gezeigten Endstücken des Gehäuses 13 befestigt sind.

Mittels einer verkürzten schematisch angedeuteten Wickelfeder 16, die einendes an dem benachbarten nicht veranschaulichten Gehäuseendstück verankert ist und anderenends in der Wickelwelle 15, wird die Wickelwelle 15 in einer Drehrichtung federvorgespannt. Die Schraubenfeder 16 dient als Federmotor.

An der Wickelwelle 15 ist mit einer Kante eine Rollobahn 17 befestigt, die etwa trapezförmig zugeschnitten ist.

Die von der Wickelwelle 15 abliegende und zu dieser parallel verlaufende Kante der Rollobahn 17, ist mit einem Zugstab 18 verbunden, der gleichzeitig die Aufgabe hat, die betreffende Kante der Rollobahn 17 auszusteifen.

Die Rollobahn 17 führt wie die Figuren 1 und 2 zeigen, nach oben aus der zylindrischen Nut 14 heraus und von dort weiter durch den Auslaufschlitz 12.

Um die Rollobahn 17 aufzuspannen und aufgespannt zu halten, sind zwei Betätigungselemente in Gestalt von Schwnekhebeln 19 und 21 vorgesehen. Jeder der beiden Hebel 19 und 21 ist, wie der aufgebrochene Bereich in Fig. 1, bzw. das in Fig. 2 gezeigte linke Ende des Fensterrollos 9 erkennen lässt, mittels eines zugehörigen Schwenkzapfens 22 am jeweiligen Ende des Gehäuses 13 schwenkbar gelagert. Der Schwenkzapfen 22 ist auf einer nach hinten weisenden planen Gehäusefläche 23 befestigt. Die Gehäusefläche 23 verläuft im eingebauten Zustand parallel zu einer durch die Heckscheibe 4 definierten Ebene. Auf diese Weise schwenken die beiden Hebel 19 und 21 in dieser besagten Ebene, und zwar im gegenläufigen Sinne, da jeder von ihnen an einem der beiden Enden des Gehäuses 13 gelagert ist.

Zur Drehlagerung ragt der Zapfen 22 durch eine entsprechende Bohrung in dem Hebel 19 bzw. 21, der mit Hilfe einer Krallenfeder 24 axial auf dem Zapfen 22 gesichert ist.

Das von dem Schwenkzapfen 22 abliegende Ende jedes der Hebel 19 und 21 gleitet mit einer Führungsnase 25 in einer zugehörigen nach unten offenen Nut des Zugstabs 19. Die Nuten erstrecken sich in Längsrichtung des Zugstabs.

Um die Hebel 19 und 21 zu verschwenken, ist jeder der beiden Hebel 19 und 21 wie für den Hebel 19 zu erkennen, mit einer Hebelverlängerung 26 versehen, die sich, gesehen von dem Betätigungselement 19 her, über den Schwenkzapfen 22 in radialer Richtung hinaus erstreckt. Die Hebelverlängerung 26 trägt einen zu dem Zapfen 22 achsparallelen Kobelzapfen 27.

Damit die beiden Schwenkhebel 19 und 21 im Sinne des Ein- und Ausfahrens der Rollobahn 17 verschwenkt werden können, ist eine Antriebseinrichtung 28 vorhanden, zu der ein Getriebemotor 19 sowie zwei flexible Koppelmittel 31 gehören.

Der Getriebemotor 29 setzt sich aus einem permanent erregten Gleichstrommotor 32 und einem Untersetzungsgetriebe 33 zusammen, auf dessen Ausgangswelle 34 drehfest eine Scheibe 35 sitzt, die zwei zu der Ausgangswelle 34 achsparallele Kurbelzapfen 36 trägt.

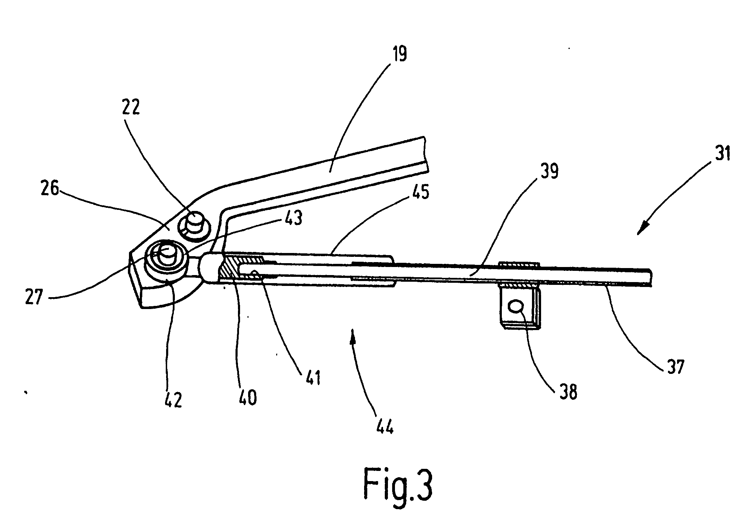

Die vergrößerte Darstellung aus Fig. 3 lässt den Aufbau des Koppelmittels 31 erkennen. Sie zeigt dasjenige Ende des Koppelmittels 31, das mit dem Betätigungshebel 19 verbunden ist.

Das Koppelmittel 31 weist eine wie bei Bowdenzügen übliche flexible schlauchförmige Hülle 37 auf, die gegebenenfalls durch eine Stahlspirale verstärkt ist. Die flexible Hülle 37 ist in der Nähe ihres betreffenden Endes mit Hilfe einer Schelle 38 auf dem Gehäuse 13 befestigt. Das andere Ende der Hülle 37 ist in ähnlicher Weise an dem Getriebe 33 verankert. Diese Verankerung ist jedoch aus Gründen der Übersichtlichkeit nicht weiter gezeigt. Sie sieht im wesentlichen genauso aus, wie dies in Fig. 3 für das hebelseitige Ende gezeigt ist.

In der Hülle 37 ist frei verschieblich eine Seele 39 untergebracht, die als Volldraht beispielsweise aus Kunststoff aufgeführt ist.

Um die Seele 39 mit dem Kurbelzapfen 27 zu verbinden, sitzt auf dem freien Ende der Seele 39 ein Stab 40, der eine zu dem Stab 40 koaxiale Sackbohrung 41 enthält. In der Sackbohrung 41 steckt das betreffende freie Ende der Seele 39. Nach dem Einstecken der Seele 39 ist der Stab im Bereich der Bohrung 41 gequetscht oder gecrimpt, damit eine unlösbare reibschlüssige Verbindung zwischen dem Stab 40 und der Seele 39 Zustande kommt.

Das von der Seele 39 abliegende Ende des Stabs 40 trägt eine Ringöse 42, die auf den Kurbelzapfen 27 aufgesteckt und dort mittels einer Krallenfeder 43 gesichert ist.

Da, wie oben ausführlich erläutert ist, am Ende der Einfahrbewegung von dem Koppelmittel 31 Druckkräfte übertragen werden müssen, besteht die Gefahr, dass das Koppelmittel 31 im Bereich zwischen der Schelle 38 und dem Kurbelzapfen 27 ausknickt. Um dies zu verhindern, sind Knickschutzmittel 44 vorgesehen.

Das Knickschutzmittel 44 besteht bei dem in Figur 3 gezeigten Ausführungsbeispiel aus einem knicksteifen Rohr 45 in dem koaxial der Stab 40 steckt. Das Rohr 45 ist an dem betreffenden Ende starr und unverschieblich mit dem Stab 40 verbunden und übergreift an dem anderen Ende wie gezeigt, teleSkopartig von außen die Hülle 37 des Koppelmittels 31.

Die Verbindung zwischen dem Koppelmittel 31 und dem Getriebemotor kann in der gleichen Weise ausgeführt sein, wie dies in Fig. 3 für die Verbindung mit dem Schwenkhebel 19 gezeigt ist.

Die Anordnung arbeitet wie folgt:

Im Ruhezustand ist die Rollobahn 17 weitgehend auf die Wickelwelle 15 aufgewickelt. Der Zugstab 18 überdeckt über seine Länge den Auflaufschlitz 12. In dieser Stellung liegen die beiden Hebel 19 und 21 im wesentlichen parallel zu Längserstreckung zur Wickelwelle 15. Die Hebelverlängerungen 26 nehmen ihre am weitesten nach außen gestreckte Stellung ein. Dies bedeutet wiederum, dass das betreffende Ende der Seele 39 am weitesten aus der flexiblen Hülle 37 nach außen vorgeschoben ist.

Wenn der Benutzer ausgehend von der Ruhestellung die Rollobahn 17 aufspannen will, um das Fahrzeug gegen Sonneneinstrahlung von außen zu schützen, wird über einen entsprechenden, nicht gezeigten elektrischen Schalter der Motor 32 in Gang gesetzt, wodurch die Scheibe 35 in eine begrenzte Drehbewegung gebracht wird. Die Drehbewegung ist so gewählt, dass die im Getriebemotor 29 benachbarten Enden der Seelen 39 der beiden Koppelmittel 31 aufeinander zu bewegt werden. Hierdurch wird eine Zugkraft auf die betreffende Hebelverlängerung 26 übertragen, die bestrebt ist, die beiden Hebelverlängerungen 26 aufeinander zu zu schwenken. Diese Schwenkbewegung führt zu einem Aufstellen der Schwenkhebel 19 und 21. Sie bewegen sich aus der Stellung parallel zu Wickelwelle 15 in eine weitgehende aufgerichtete Stellung, wobei sie aus dem Auslaufschlitz 12 nach außen herausschwenken.

Während der Schwenkbewegung gleiten ihre Führungsfinger 25 zu dem betreffenden Ende des Zugstabs 18 und führen den Zugstab 18 von dem Auslaufschlitz 12 weg. Dabei wird gleichzeitig die Rollobahn 17 gegen die Wirkung der Schraubenfeder 16 von der Wickelwelle 15 abgewickelt. Das Ende der Schwenkbewegung wird erreicht, wenn die Führungsfinger 25 am betreffenden Ende des Zugstabs 18 angekommen sind. Weil die Führungsnut in diesem Bereich verschlossen ist, laufen die beiden Schwenkhebel 19 und 12 gegen eine mechanische Blockade.

Die Anordnung ist steif genug ausgeführt, damit die im Blockierzustand von dem Getriebemotor 29 ausgeübten Kräfte und Drehmomente die Koppelmittel und die Schwenkhebel 19 und 21 nicht beschädigen können.

Nach einer vorbestimmten Zeit wird durch eine nicht weiter gezeigte Zeitsteuerung der Motorstrom abgeschaltet. Die Zeit, nach der der Strom abgeschaltet wird, reicht mit Sicherheit die Rollobahn 17 vollständig aufzuspannen.

Der Getriebemotor 29 ist selbsthemmend, womit nach dem Abschalten des Stroms für den Getriebemotor 29 die erreichte ausgefahrene Stellung bestehen bleibt.

Zum Einfahren wird der Getriebemotor 29 in der umgekehrten Richtung in Gang gesetzt. Bei der umgekehrten Drehrichtung werden die äußeren Enden der Seelen 29 nach außen geschoben, bzw. es wird ihnen ermöglicht, sich nach außen zu bewegen.

Ob beim Einfahren der Hebel 19,21 die Koppelmittel 31 Druckkräfte übertragen oder nach wie vor auf Zug beansprucht werden, hängt von Winkelstellung ab, die die Hebel 19, 21 in der voll ausgefahrenen Stellung hatten. Je steiler die Hebel 19, 21 stehen, umso kleiner wird das Drehmoment, das der Federmotor 16 über die Rollobahn 17 auf die Schwenkhebel 19 und 21 ausüben kann. Bei extrem steil stehenden Hebel 19 und 21 kann es sein, dass zu Beginn der Einfahrbewegung bereits eine Druckkraft von den Koppelmitteln 31 aufgebracht werden muss, während bei verhältnismäßig flach stehenden Schwenkhebeln 19, 21 auch zu Beginn des Einfahrens die Koppelmittel 31 eher ein zu schnelles Einfahren bremsen als Einschwenkbewegungen aktiv hervorzurufen. In jedem Falle wird es einen Schwenkbereich der Schwenkhebel 19, 21 geben, in dem der Federmotor 16 an der Wickelwelle 15 eine nennenswerte Kraft erzeugt, um die Schwenkhebel 19, 21 in Richtung auf ihre Ruhestellung zu bewegen. In diesem Bereich wir die Einschwenkbewegung über den Getriebemotor 29 gesteuert, der als Bremse wirkt.

Um die Schwenkhebel 19, 21 vollständig in die Ruhelage zu bringen und eventuell vorstehende abgefederte Führungsteile durch den Auslaufschlitz 12 nach unten zu bewegen, reicht die Kraft des Federmotors 16 nicht aus. In diesem Falle kommt das erforderliche Drehmoment von dem Getriebemotor 29, wozu eine Druckkraft über die Koppelmittel 31 übertragen werden muss.

Die Druckkraft kann ohne Ausknicken zwischen den Verankerungspunkten Der Hülle 45 des jeweiligen Koppelmittels 31 übertragen werden, d.h. im Bereich zwischen der Schelle 38 und der entsprechenden nicht gezeigten Schelle bei dem Getriebemotor 29.

Damit auch zwischen der Schelle 39 und dem Kurbelzapfen 27 kein Ausknicken stattfindet, ist das Knickschutzmittel 44 vorhanden. Es übergreift in jeder Betriebsstellung über ein ausreichendes Stück von außen her die flexible Hülle 37 und verhindert im Zusammenwirken mit der relativ steifen jedoch flexiblen Hülle 37 ein seitliches Ausknicken der Seele 39. Die gleiche Wirkung kommt am motorseitigen Ende des Koppelmittels 31 zustande.

Es bedarf keiner weiteren ausführlichen Erläuterung um zu erkennen, dass die Schelle 38 möglichst nahe dem freien Ende der flexiblen Hülle 37 angeordnet wird, andererseits aber von dem freien Ende hinreichend beabstandet ist, um den vollständigen Hub, den das Rohr 45 längs der flexiblen Hülle 37 vollführt, nicht zu behindern. Dabei muss auch im vollständig ausgeschobenen Zustand eine hinreichend lange Überdeckung zwischen dem Rohr 45 und der flexiblen Hülle 37 vorhanden sein, um ein eventuelles seitliches Ausknicken wirksam zu verhindern. Dies wird im Zusammenwirken zwischen dem Rohr 45 und der flexiblen äußeren Hülle 37 erreicht, die deutlich knicksteifer ist als die in ihr geführte Seele 39.

Die Knickschutzeinrichtung 44 verhindert nicht die erforderliche Schwenkbewegung des Koppelmittels im Bereich zwischen der Schelle 38 und der Hebelverlängerung 26, wenn diese ihren Bogen von der Ruhestellung bis zu voll aufgespannten Stellung der Rollobahn 18 durchläuft.

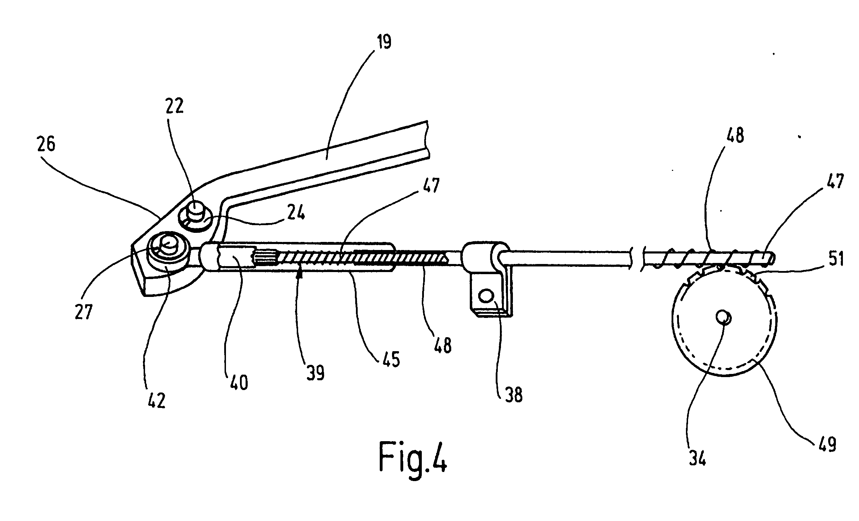

Die Ausführungsform nach Fig. 4 unterscheidet sich von der Ausführungsform nach Fig. 3 in der Art der Seele 39. Während bei dem zuvor erläuterten Ausführungsbeispiel die Seele 39 aus einem massiven Volldraht beispielsweise aus Polyamid besteht und einstückig ist, ist die Seele 39 gemäß Fig. 4 eine sogenannte SU-flexwelle™. Sie setzt sich aus einem Kern 47 und einem dem Kern 47 schraubenförmig umgebenden Draht 48 zusammen. Der schraubenförmige verlaufende Draht 48 sitzt fest auf dem Kern 47 und bildet auf der Außenseite des Kerns 47 eine ein-oder mehrgängige Schraube. Die einzelnen Windungen der Schraube weisen voneinander einen Abstand auf, der größer ist, als der Durchmesser des die Schraube bildenden Drahtes 48. Dadurch entsteht auf der Außenseite der Seele 39 eine schraubenförmige Verzahnung.

Die Art und Weise wie die so gestaltete Seele 39 angetrieben wird, ist links in Figur 4 stark schematisiert und vergrößert veranschaulicht.

Anstelle der Scheibe 35 mit den beiden Kurbelzapfen 36 steckt drehfest auf der Ausgangswelle 34 ein Zahnrad 49 mit Zähnen 51, deren Zahnteilen am Außenumfang dem Abstand der Windungen des schraubenförmig aufgebrachten Drahtes 48 entspricht. Die von dem Draht 48 gebildeten Windungen greifen in die Zahnlücken zwischen den Zähnen 51 formschlüssig ein. Mit Hilfe einer nicht gezeigten Führungseinrichtung wird die Seele 39 tangential an dem Zahnrad 49 anliegend gehalten, um die den Eingriff sicherzustellen.

Da die Führung bis unmittelbar an den Umfang des Zahnrades 49 heranreicht, besteht dort keine Gefahr, dass die Seele 39 ausgeknickt. Anders sind dagegen die Verhältnisse im Bereich zwischen der Schelle 38 und der Hebelverlängerung 26, weshalb dort das betreffende Ende der als SU-flexwelle™ ausgeführten Seele 39 mit der Knickschutzeinrichtung 44 gemäß 3 versehen ist. Die Verbindung zwischen der Seele 39 und dem betreffenden Kurbelzapfen 27 ist gemäß der Ausführungsform nach Fig. 3 gestaltet.

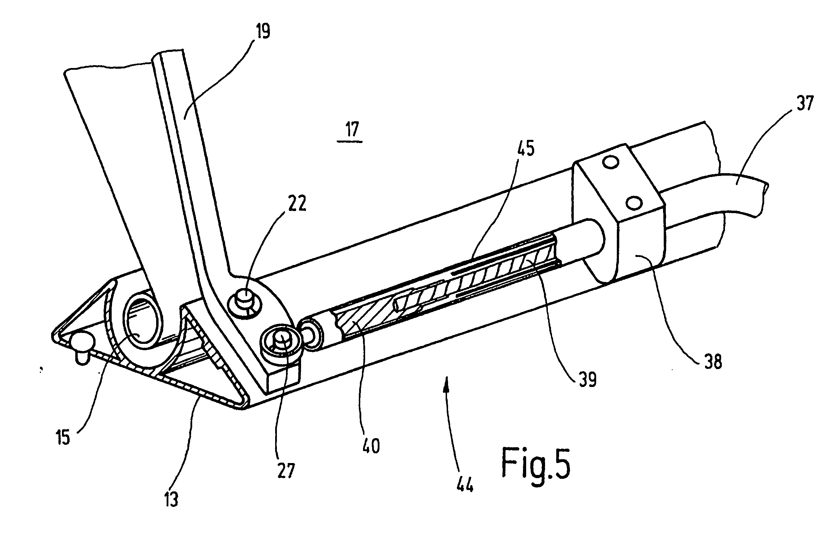

Die Knickschutzreinrichtung 44 kann auch gemäß Fig. 5 ausgeführt sein. Hierbei ist das Rohr 45 in einer als Klemmblock ausgeführten Klemmschelle 38 einends fest verankert. Auf der Seite des Klemmblocks 38 führt die flexible Hülle 37 in das Rohr 45 hinein, und zwar ein entsprechendes kurzes Stück. In dem Rohr 45 ist die Hülle 37 axial unbeweglich festgeklemmt.

Abweichend von dem vorhergehenden Ausführungsbeispiel ist das Rohr 45 nicht mit dem Stab 40 verbunden. Der Stab 40 ist vielmehr in dem Rohr 45 mit einem geringen Radialspiel frei verschieblich. Damit die Knickschutzwirkung zustande kommt, ist der Stab 40 entsprechend lang ausgebildet, in jeder Betriebsstellung eine hinreichende Überdeckung zwischen dem Stab 40 und dem Rohr 45 zu haben. Die Seele 39 ist bei dem Ausführungsbeispiel nach Fig. 5 als glatte Litze ausgeführt.

Bei allen gezeigten Ausführungsbeispielen besteht die Möglichkeit den Getriebemotor 29 an einer beliebigen Stelle abgesetzt von dem Gehäuse 13 des Fensterrollos 9 unterzubringen. Der Getriebemotor 29 muss nicht mehr wie beim Stand der Technik unmittelbar auf dem Gehäuse 13 im Wesentlichen zwischen den beiden Zapfen 22 angebracht sein. Durch die neue Lösung wird es möglich, den Platzbedarf unterhalb der Hutablage 11 zu verringern, indem der Motor in einem Bereich gebracht wird, wo er nicht mehr stört, d.h in einem ohnehin vorhandenen Totraum, beispielsweise an der zum Fahrzeuginneren hin gelegenen Seite des Gehäuses 13, oder auch in einer Nische an der Seitenwand zwischen der äußeren Karosserie und der Innenverkleidung.

Anstelle der einteiligen Schwenkhebel 19, 21, die gleitend mit dem Zugstab 18 zusammenwirken, können auch zwei Kniehebel verwendet werden. Jeder der Kniehebel setzt sich aus zwei Armen zusammen, die über ein Scharniergelenk mit einander verbunden sind. Der abliegende Arm ist über ein weiteres Scharnier mit dem Zugstab 18 verbunden, während der Arm, der der Wickelwelle 15 benachbart ist, in der gleichen Weise gelagert und angetrieben ist wie der Schwenkhebel 19 bzw. 21 des geoffenbarten Ausführungsbeispiels.

Bei einem Heckscheibenrollo 9 ist in einem Gehäuse 13 eine Wickelwelle 15 drehbar gelagert. Die Wickelwelle 15 wird durch eine Feder 16 in Aufwickelrichtung der Rollobahn 17 vorgespannt. Zum Aufspannen der Rollobahn 17 sind zwei Schwenkhebel 19, 21 vorgesehen, die an dem Gehäuse 13 schwenkbar gelagert sind. Die getriebliche Verbindung zwischen den Schwenkhebeln 19 und 21 und einem Getriebemotor 29 geschieht durch Bowdenzüge bzw. Koppelmittel 31, die über einen Bereich ihrer Länge flexibel sind. Um ein Ausknicken am freien Ende zu verhindern, sind dort Knickschutzmittel 44 vorgesehen.

## Patentansprüche

1. Fensterrollo (9)
mit einer drehbar gelagerten Wickelwelle (15),
mit einer Rollobahn (17), die mit einer Kante an der Wickelwelle (15) und mit einer zu der Wickelwelle parallelen Kante an einer Zugstange (18) befestigt ist,
mit wenigstens einem Betätigungsmittel (19,21), das neben der Wickelwelle (15) schwenkbar gelagert ist und mit seinem anderen Ende mit der Zugstange (18) verbunden ist,
mit ersten Antriebsmitteln (16), die der Wickelwelle (15) zugeordnet sind, um die Wickelwelle (15) wahlweise in Umdrehungen zu setzen,
mit zweiten Antriebsmitteln (29), die den Betätigungsmitteln (19,21) zugeordnet sind,
mit wenigstens einem Koppelmittel (31), das über wenigstens einen Abschnitt seiner Längserstreckung flexibel ist und das eine äußere Hülle (37) sowie eine in der Hülle (37) längsverschiebliche Seele (39) aufweist, die die zweiten Antriebsmittel (29) mit dem Betätigungselement (19,21) verbindet, und
mit Knickschutzmitteln (44), die dazu dienen, einen an einem Ende der Seele (39) befindlichen Abschnitt in jeder Betriebsstellung ausknicksicher zu führen.

2. Fensterrollo nach Anspruch 1, **dadurch gekennzeichnet, dass** die Seele (39) sowohl an ihrem antriebsseitigen Ende als auch an ihrem abtriebsseitigen Ende mit Knickschutzmitteln (44) versehen ist.

3. Fensterrollo nach Anspruch 1, **dadurch gekennzeichnet, dass** das Knickschutzmittel (44) ein biegesteifes Rohrstück (45) aufweist, das mit dem aus der Hülle (37) herausragenden Ende der Seele (39) verbunden ist und die Hülle (37) teleskopartig übergreift.

4. Fensterrollo nach Anspruch 1, **dadurch gekennzeichnet, dass** das Knickschutzmittel (44) einen biegesteifen Endabschnitt (40) der Seele (37) aufweist.

5. Fensterrollo nach Anspruch 4, **dadurch gekennzeichnet, dass** der biegesteife Endabschnitt (40) in der Hülle (37) geführt ist.

6. Fensterrollo nach Anspruch 4, **dadurch gekennzeichnet, dass** der biegesteife Endabschnitt (40) in einem biegesteifen Rohr (45) geführt ist, in das die Hülle (37) einmündet.

7. Fensterrollo nach Anspruch 4, **dadurch gekennzeichnet, dass** der biegesteife Endabschnitt (40) von einem Stab gebildet ist, der mit dem flexiblen Teil der Seele (37) endseitig verbunden ist.

8. Fensterrollo nach Anspruch 4, **dadurch gekennzeichnet, dass** der flexible Teil der Seele (37) mit dem biegesteifen Endabschnitt (40) über eine Crimpverbindung verbunden ist.

9. Fensterrollo nach Anspruch 1, **dadurch gekennzeichnet, dass** die Seele (37) zumindest abschnittsweise aus einer Litze oder einem flexiblen Draht besteht.

10. Fensterrollo nach Anspruch 1, **dadurch gekennzeichnet, dass** die Seele (39) an ihrem antriebsseitigen Ende eine Verzahnung (48) aufweist.

11. Fensterrollo nach Anspruch 10, **dadurch gekennzeichnet, dass** der flexible Teil der Seele (37) einen linienförmigen Kern (47) aufweist, der auf seiner Außenseite einen schraubenförmig verlaufenden Draht (48) trägt, der mit dem Kern (47) unbeweglich verbunden ist und die Verzahnung bildet.

12. Fensterrollo nach Anspruch 1, **dadurch gekennzeichnet, dass** es frei von Führungsschienen ist und lediglich das wenigstens eine Betätigungsmittel (19,21) die Rollobahn (17) im aufgespannten Zustand hält.

13. Fensterrollo nach Anspruch 1, **dadurch gekennzeichnet, dass** das Betätigungsmittel (19,21) ein einfacher Hebel ist.

14. Fensterrollo nach Anspruch 13, **dadurch gekennzeichnet, dass** der Hebel (19,21) eine über seine Schwenkachse (22) hinaus ragende Verlängerung (26) aufweist, an der das Koppelmittel (31) angreift.

15. Fensterrollo nach Anspruch 13, **dadurch gekennzeichnet, dass** das Betätigungsmittel ein Kniehebel ist, der sich aus einem inneren und einem äußeren Kniehebelarm zuzusammensetzt, die über ein Scharniergelenk miteinander verbunden sind, wobei der innere Kniehebelarm bei der Wickelwelle (15) schwenkbar gelagert ist.

16. Fensterrollo nach Anspruch 15, **dadurch gekennzeichnet, dass** der innere Kniehebelarm eine über seine Schwenkachse hinaus ragende Verlängerung (26) aufweist, an der das Koppelmittel (31) angreift.

17. Fensterrollo nach Anspruch 1, **dadurch gekennzeichnet, dass** die ersten Antriebsmitteln (16) von einer Feder gebildet sind.

18. Fensterrollo nach Anspruch 17, **dadurch gekennzeichnet, dass** die Feder (16) in Gestalt eines Federmotors mit der Wickelwelle (15) gekuppelt ist und die Wickelwelle (15) in Aufrollrichtung der Rollobahn (17) vorspannt.

19. Fensterrollo nach Anspruch 1, **dadurch gekennzeichnet, dass** zu den Antriebsmitteln (29) wenigstens ein Getriebemotor gehört.

20. Fensterrollo nach Anspruch 19, **dadurch gekennzeichnet, dass** das zweite Antriebsmittel (29) von einem Getriebemotor gebildet ist.

## Claims

1. Window roller blind (9),
with a rotatably mounted winding shaft (15),
with a blind (17), which is fastened at one edge to the winding shaft (15) and at an edge parallel to the winding shaft to a pull rod (18),
with at least one operating means (19, 21), which is mounted to swivel next to the winding shaft (15) and at its other end is connected to the pull rod (18), with first drive means (16), which are allocated to the winding shaft (15) to selectively set the winding shaft (15) in rotation,
with second drive means (29), which are allocated to the operating means (19, 21),
with at least one coupling means (31), which is flexible over at least one section of its longitudinal extension and which has an outer sheath (37) as well as a central body (39), which is longitudinally displaceable in the sheath and connects the second drive means (29) to the operating element (19, 21), and with crumple protection means (44), which serve to guide a section located at one end of the central body (39) in each operating position securely against crumpling.

2. Window roller blind according to Claim 1, **characterised in that** the central body (39) is provided with crumple protection means (44) both on its drive-side end and on its output-side end.

3. Window roller blind according to Claim 1, **characterised in that** the crumple protection means (44) has a rigid tubular piece (45), which is connected to the end of the central body (39) projecting out of the sheath (37) and engages over the sheath (37) in a telescope-like manner.

4. Window roller blind according to Claim 1, **characterised in that** the crumple protection means (44) has a rigid end section (40) of the central body (39).

5. Window roller blind according to Claim 4, **characterised in that** the rigid end section (40) is guided in the sheath (37).

6. Window roller blind according to Claim 4, **characterised in that** the rigid end section (40) is guided in a rigid tube (45), into which the sheath (37) opens.

7. Window roller blind according to Claim 4, **characterised in that** the rigid end section (40) is formed by a rod, which is connected at the end with the flexible part of the central body (39).

8. Window roller blind according to Claim 4, **characterised in that** the flexible part of the central body (39) is connected to the rigid end section (40) via a crimp connection.

9. Window roller blind according to Claim 1, **characterised in that** the central body (39) is composed of a cord or flexible wire at least in sections.

10. Window roller blind according to Claim 1, **characterised in that** the central body (39) has a tooth arrangement (48) at its drive-side end.

11. Window roller blind according to Claim 10, **characterised in that** the flexible part of the central body (39) has a linear core (47), which bears a wire (48) running in a spiral shape on its outside, said wire being connected immovably to the core (47) and forming the tooth arrangement.

12. Window roller blind according to Claim 1, **characterised in that** it is free from guide rails and only the at least one operating means (19, 21) holds the blind (17) in opened-out state.

13. Window roller blind according to Claim 1, **characterised in that** the operating means (19, 21) is a simple lever.

14. Window roller blind according to Claim 13, **characterised in that** the lever (19, 21) has an extension (26), which projects beyond its swivel axis (22) and on which the coupling means (31) acts.

15. Window roller blind according to Claim 13, **characterised in that** the operating means is a toggle lever, which comprises an inner and an outer toggle lever arm, which are connected to one another via a hinge joint, wherein the inner toggle lever arm is mounted to swivel at the winding shaft (15).

16. Window roller blind according to Claim 15, **characterised in that** the inner toggle lever arm has an extension (26), which projects beyond its swivel axis and on which the coupling means (31) acts.

17. Window roller blind according to Claim 1, **characterised in that** the first drive means (16) are formed by a spring.

18. Window roller blind according to Claim 17, **characterised in that** the spring (16) in the form of a spring motor is coupled with the winding shaft (15) and prestresses the winding shaft (15) in the roll-up direction of the blind (17).

19. Window roller blind according to Claim 1, **characterised in that** the drive means (29) includes at least one geared motor.

20. Window roller blind according to Claim 19, **characterised in that** the second drive means (29) is formed by a geared motor.

## Revendications

1. Store de fenêtre comprenant :
- un arbre d'enroulement (15) monté en rotation,
- une bande de store (17) qui est fixée par un bord à l'arbre d'enroulement (15) et par un bord parallèle à cet arbre à une barre de traction (18),
- au moins un moyen d'actionnement (19, 21) qui est monté pivotant à côté de l'arbre d'enroulement (15) et relié par son autre extrémité à la barre de traction (18),
- des premiers moyens d'entraînement (16) qui sont associés à l'arbre d'enroulement (15) pour faire tourner celui-ci à volonté,
- des seconds moyens d'entraînement (29) qui sont associés aux moyens d'actionnement (19, 21),
- au moins un moyen d'accouplement (31), flexible sur au moins une partie de sa longueur et qui présente une enveloppe externe (37) ainsi qu'une âme (39) pouvant coulisser dans celle-ci et qui relie les seconds moyens d'entraînement (29) à l'élément d'actionnement (19, 21), et
- des moyens anti-flambage (44) qui servent à guider sans risque de flambage dans toute position de fonctionnement, une partie se trouvant à l'extrémité de l'âme (39).

2. Store de fenêtre selon la revendication 1, **caractérisé en ce que** l'âme (39) est équipée de moyens anti-flambage (44) à la fois à son extrémité située du côté de l'entraînement et à son extrémité opposée.

3. Store de fenêtre selon la revendication 1, **caractérisé en ce que** le moyen anti-flambage (44) présente une partie tubulaire (45) résistant à la flexion, qui est reliée à l'extrémité de l'âme (39) dépassant l'enveloppe (37) et qui recouvre à la manière d'un télescope l'enveloppe (37).

4. Store de fenêtre selon la revendication 1, **caractérisé en ce que** le moyen anti-flambage (44) présente une partie d'extrémité (40) de l'âme (37), qui résiste à la flexion.

5. Store de fenêtre selon la revendication 4, **caractérisé en ce que** la partie d'extrémité (40) qui résiste à la flexion est guidée dans l'enveloppe (37).

6. Store de fenêtre selon la revendication 4, **caractérisé en ce que** la partie d'extrémité (40) qui résiste à la flexion est guidée dans un tube (45) également résistant à la flexion et dans lequel débouche l'enveloppe (37).

7. Store de fenêtre selon la revendication 4, **caractérisé en ce que** la partie d'extrémité (40) qui résiste à la flexion est constituée par une barre qui est reliée monobloc à la partie flexible de l'âme (37).

8. Store de fenêtre selon la revendication 4, **caractérisé en ce que** la partie flexible de l'âme (37) est reliée par une liaison sertie à la partie d'extrémité (40) qui résiste à la flexion.

9. Store de fenêtre selon la revendication 1, **caractérisé en ce que** l'âme (37) est composée au moins pour une partie d'un toron ou d'un fil flexible.

10. Store de fenêtre selon la revendication 1, **caractérisé en ce que** l'âme (37) présente à son extrémité située du côté de l'entraînement une denture (48).

11. Store de fenêtre selon la revendication 10, **caractérisé en ce que** la partie flexible de l'âme (37) présente un noyau linéaire (47) portant sur sa surface externe un fil (48) disposé en hélice, qui est relié sans pouvoir bouger au noyau (47) et forme la denture.

12. Store de fenêtre selon la revendication 1, **caractérisé en ce qu'**il ne comporte pas de rail de guidage et que seulement au moins un moyen d'actionnement (19, 21) maintient la bande de store (17) à l'état tendu.

13. Store de fenêtre selon la revendication 1, **caractérisé en ce que** le moyen d'actionnement (19, 21) est un simple levier.

14. Store de fenêtre selon la revendication 13, **caractérisé en ce que** le levier (19, 21) présente au-delà de son axe de basculement (22) un prolongement (26) avec lequel est en prise le moyen d'accouplement (31).

15. Store de fenêtre selon la revendication 13, **caractérisé en ce que** le moyen d'actionnement est un moyen à genouillère composé d'un bras interne et d'un bras externe reliés entre eux par une articulation à charnière, le bras interne étant monté basculant sur l'arbre d'enroulement (15).

16. Store de fenêtre selon la revendication 15, **caractérisé en ce que** le bras interne du levier à genouillère présente un prolongement (26) au-delà de son axe de basculement et avec lequel est en prise le moyen d'accouplement (31).

17. Store de fenêtre selon la revendication 1, **caractérisé en ce que** les premiers moyens d'entraînement (16) peuvent être constitués par un ressort.

18. Store de fenêtre selon la revendication 17, **caractérisé en ce que** le ressort (16) est accouplé en tant que moteur élastique à l'arbre d'enroulement (15) qu'il précontraint dans le sens d'enroulement de la bande de store (17).

19. Store de fenêtre selon la revendication 1, **caractérisé en ce qu'**au moins un motoréducteur appartient aux moyens d'entraînement (29).

20. Store de fenêtre selon la revendication 19, **caractérisé en ce que** le second moyen d'entraînement (29) est constitué par un motoréducteur.
